# EUROPEAN PATENT APPLICATION

(11) **EP 3 556 526 A1**
(43) Date of publication of application: **23.10.2019**
(21) Application number: 19169210.2
(22) Date of filing: 15.04.2019
(51) Int. Cl.: B29C 33/10, B29C 44/58, B29C 33/00, B29L 31/00

(54) **MOLD FOR MANUFACTURING OF PARTS OF VEHICLE SEATS**

(30) Priority: 20.04.2018 ES 201830569 U
(71) Applicant: Matrival, S.L., E-46469 Beniparrel (Valencia) (ES)
(72) Inventor: PEÑA VALCÁRCEL, Felipe, 46469 Beniparrell (Valencia) (ES)
(74) Representative: Ungria López, Javier

(57) **Abstract**

The invention comprises a base (2) that includes a cavity (4) and a cover (3), which in turn includes a complementary projecting structure (5) of the cavity (4). The base (2) comprises a perimeter suction chamber (7) around the cavity (4) which is connected to the inside of the hollow structure (6) by means of several openings (8) for the removal of gases. The mold that increases the quality of the manufactured piece, preventing the appearance of irregularities in its structure.

## Description

### DESCRIPTION

### Object of the invention

The present invention relates to a mold for the manufacturing of parts of vehicle seats that increases the quality of the piece manufactured in the mold, preventing the appearance of irregularities in the manufactured piece. The mold for the manufacturing of parts of vehicle seats that is the object of the invention is applicable in the automotive industry, specifically in the industry of manufacturing of components for vehicles.

### Background of the invention and technical problem to be solved

The softness of the suspension and the level of acoustic insulation of the cabin are also important, but no matter how good these are, the seats of a car are the most important for ensuring the comfort of the driver and the occupants; if the seats fail, the experience of driving or travel may be anything but enjoyable.

The seat must offer the driver good lumbar support, balanced cushioning and fill that absorbs the vibrations that are produced on irregular pavement, as it is known that a seat that offers inadequate or insufficient support causes increased fatigue and back pain.

But in addition to the comfort of the seat it helps with the task of driving the car, properly supporting the body laterally, for example on a curve, and also supporting it during braking, for example, preventing the hips from sliding forward.

The seats also perform a safety function because a good seat, during sudden deceleration, prevents the body from slipping out from under the seatbelt and sliding forward (submarine effect), protects the sides of the abdomen in case of a lateral impact, and adequately cradles the head, preventing cervical injuries in case of a rear end collision.

For the safety function to be performed appropriately, it is very important that the part obtained from the expandable material is perfect, free of hollows or air bubbles as a result of poor discharge of the gases inside the mold during the curing or molding process.

The molds used in the manufacturing of the parts which, once assembled, make up a seat of a vehicle, generate problems of dimensional and surface homogeneity, which ultimately have an impact on the final quality of the seat that is manufactured and therefore constitute a point in regard to which evolution is required.

The exothermic reaction of the materials used produces an abundance of gases, heat, etc.

The mold of the invention proposes a solution to improve the expulsion of the air and gases generated inside the mold that are trapped when it is closed and that cause so many problems of dimensional and surface homogeneity in the final part with conventional molds that do not incorporate the combination of elements proposed in the new mold of the invention.

Another objective is to minimize the ridge of surplus material on the obtained part in the closure zone of the molds, reducing as much as possible the manual work to grind the final piece.

### Description of the invention

The invention that is described discloses a mold for the manufacturing of parts of vehicle seats that comprises a base with a cavity and a cover, which in turn includes a complementary projecting structure of the cavity.

In the mold that is the object of the invention, the base also comprises a perimeter suction chamber around the cavity, which is connected to the inside of the hollow structure by means of several openings for the removal of gases.

In the mold for the manufacturing of parts of vehicle seats that is the object of the invention, the perimeter suction chamber houses a sealing gasket with a hollow interior configuration.

In the mold for the manufacturing of parts of vehicle seats that is the object of the invention, the openings or channels for the removal of gases have dimensions that fall within the ranges: 10-20 mm. wide and 0.1-0.35 mm. high.

### Description of the figures

As a complement to the description provided below, and for the purpose of helping to make the characteristics of the invention more readily understandable, this specification is accompanied by a set of drawings which for an integral part of it and by way of illustration and not limitation, represent the following:

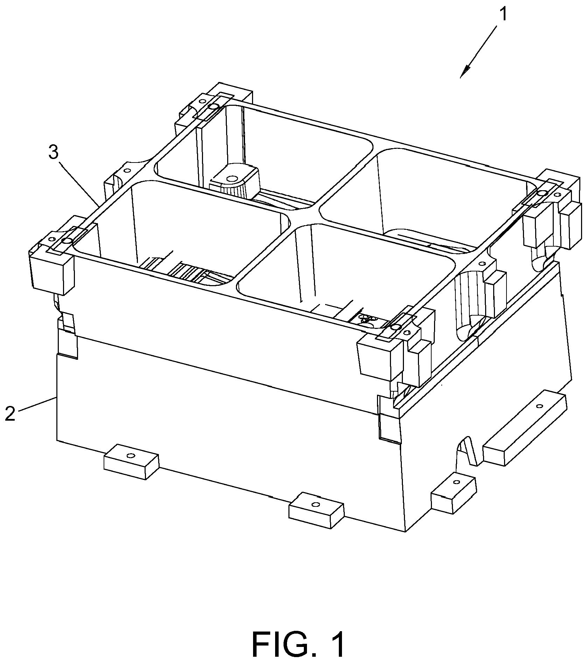

Figure 1 shows a perspective view of the mold with the cover and the base in contact.
Figure 2 shows a perspective view of the base of the mold that is the object of the invention with a detailed view of the cross-section of the sealing gasket.
Figure 3 shows a perspective view of the cover of the mold in the inverted position.

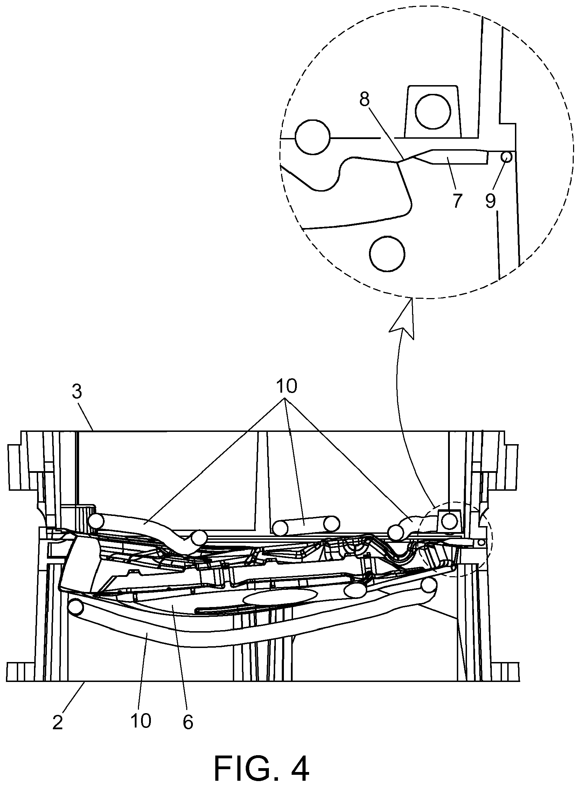

Figure 4 shows a cross-section of the mold that is the object of the invention.

The different numerical references that are shown in the figures correspond to the following elements:
1. mold,
2. base,
3. cover,
4. cavity,
5. projecting structure,
6. hollow structure,
7. perimeter structure chamber,
8. openings,
9. sealing gasket and
10. cooling circuit.

### Preferred embodiment of the invention

As already indicated, and as shown in the figures mentioned above, the object of the invention is a mold (1) to fabricate pieces that then make up a seat in a vehicle. The mold (1) which comprises a base (2) which comprises a cavity (4) and a cover (3) that in turn comprises a complementary projecting structure (5) of the cavity (4) so that, when the base (2) and the cover (3) are put in contact with each other, a hollow structure (6) is generated between the cavity (4) and the projecting structure (5), such that by injecting material into the hollow structure (6), a piece for a vehicle seat is obtained.

The base (2) also comprises a perimeter suction chamber (7) around the cavity (4), with said perimeter suction chamber (7) connected to the inside of the hollow structure (6) by means of several openings (8) located in the interior zone of the perimeter suction chamber (7) of the base (2).

The openings (8) allow the removal or discharge of gases from the hollow structure (6) to the perimeter suction chamber (7), during the process of forming the seat part, but prevent the injected material from exiting from the interior of the hollow structure (6), precisely due to the limitation of its height.

The openings (8) have dimensions that are within the ranges: 10-20 mm. wide and 0.1-0.35 mm. high, it is by means of these small dimensions of the openings that the gases are allowed to exit from the hollow structure (6) and the material is prevented from exiting, during the formation of the seat part.

The mold that is the object of the invention also has several conventional suction conduits (not shown in the figures) that are connected to the hollow structure (6), these suction conduits are configured to suction the gases removed from the interior of the cavity (4) during the process of forming the injected seat part.

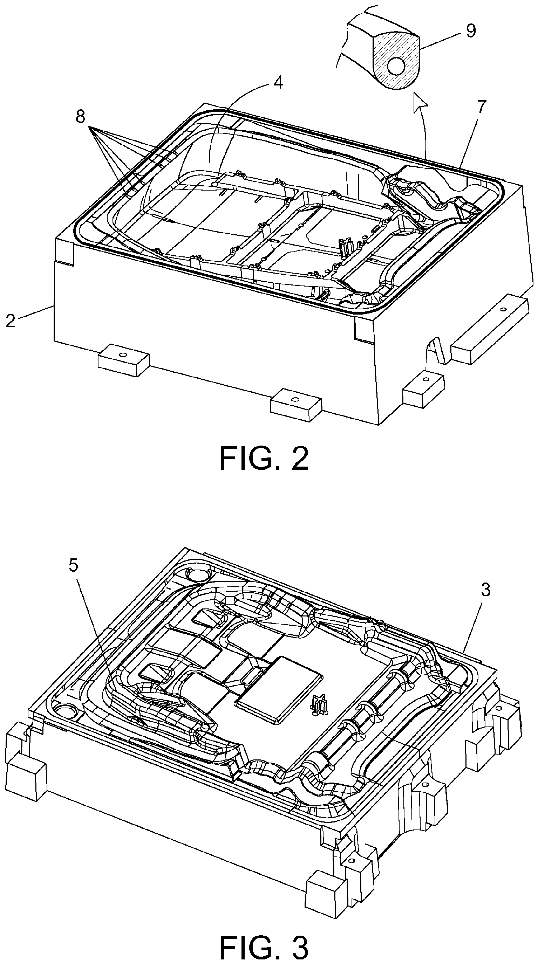

The perimeter suction chamber (7) houses a sealing gasket (9), with a special configuration because it is hollow on the inside to prevent the deformation that is suffered due to the pressure of the gases that exit from the hollow structure (6) from leaving it inoperative at certain points, so that it is compressed with greater uniformity expanding its top part on the side, generating an optimum hermetic seal between the base (2) and the cover (3). Figure 2 shows a cross-section of the sealing gasket (9) housed in the perimeter suction chamber (7).

The mold that is the object of the invention comprises cooling circuits (10) and centering elements (not shown in the figures) that are common elements in these types of molds.

The invention must not be limited to the preferred embodiment described in this document. Experts in the subject may develop other embodiments in light of the description provided here. Consequently, the scope of the invention is defined by the following claims.

## Claims

1. A mold (1) for the manufacturing of parts of vehicle seats comprising a base (2) which comprises a cavity (4) and a cover (3) that in turn includes a complementary projecting structure (5) of the cavity (4) **characterized in that** the base (2) comprises a perimeter suction chamber (7) around the cavity (4), which is connected to the inside of the hollow structure (6) by means of several openings (8) for the removal of gases.

2. The mold (1) for the manufacturing of parts of vehicle seats according to claim 1 **characterized in that** the perimeter suction chamber (7) houses a sealing gasket (9) with a hollow interior configuration.

3. The mold (1) for the manufacturing of parts of vehicle seats according to any of the preceding claims **characterized in that** the openings have dimensions that fall within the ranges: 10-20 mm wide and 0.1-0.35 mm high.
